# EUROPEAN PATENT SPECIFICATION

(11) **EP 2 819 210 B1**
(45) Date of publication and mention of the grant of the patent: **18.10.2017**
(21) Application number: 14172642.2
(22) Date of filing: 17.06.2014
(51) Int. Cl.: H01M 2/10

(54) **Battery module**
Batteriemodul
Module de batterie

(30) Priority: 27.06.2013 US 201361839965 P; 04.04.2014 US 201414245586
(43) Date of publication of application: 31.12.2014
(73) Proprietor: Samsung SDI Co., Ltd., Yongin-si, Gyeonggi-do (KR)
(72) Inventor: Park, Shi-Dong, Yongin-si, Gyeonggi-do (KR); Rhee, Jong-Han, Yongin-si, Gyeonggi-do (KR); Kim, Tae-Yong, Yongin-si, Gyeonggi-do (KR); Cho, Jun-Woo, Yongin-si, Gyeonggi-do (KR); Park, Seong-Joon, Yongin-si, Gyeonggi-do (KR)
(74) Representative: Gulde & Partner

(56) References cited:
- WO-A1-2013/073046
- DE-A1-102011 120 247
- US-A1- 2011 117 409
- US-A1- 2011 151 299
- US-A1- 2012 315 508
- US-A1- 2013 149 577

## Description

### FIELD OF THE INVENTION

An aspect of the present invention relates to a battery module.

### DESCRIPTION OF THE RELATED ART

Recently, a high-power battery module using a non-aqueous electrolyte with high energy density has been developed. The high-power battery module is configured as a large-capacity battery module manufactured by connecting a plurality of battery cells in series so as to be used for driving devices, e.g., motors of electric vehicles and the like, which require high power.

Typically, when the battery module is fixed to a base portion of an apparatus where the battery module is being mounted to, a hole for bolting is provided through expansion of an end plate adjacent to an outermost battery cell. DE 10 2011 120 247 A1 and US 2012/315508 A1 disclose batteries with end plates having integrated structural elements for coupling a first battery module to a second battery module.

However, the above method may induce an over design of a basic material of an end plate in order to secure hardness according to a weight of the battery module and an environment specification. In addition, a risk of concentration of stress due to localized module fixed structure may increase.

### SUMMARY

Various embodiments provide a battery module.

A battery module comprising a plurality of battery cells stacked along a first direction; a pair of end plates arranged spaced apart from each other in the first direction at respective end faces of the stacked battery cells; and at least one bush member is provided coupled to each end plate. The at least one bush member extends perpendicular to the first direction. Each end plate comprises a first main portion and extending portions extending from the first main portion toward the battery cells, wherein the bush member extends along the direction along which the intersection between the first main portion and the extending portion extends, is coupled to the extending portions, and further comprises a guide portion which is formed at the top of the bush member and is provided on top of the end plate at a corner formed by the extending portion and the first main portion for positioning the bush member at the end plates.

By way of the bush members, the battery module can be stably fixed. Also, since the bush members are coupled to the end plates, an impact coming from the outside that is applied to the battery module 100 may be uniformly distributed to the end plates, which prevents the impact from being applied to certain portions only.

The battery module may further comprise a fixing member, wherein the fixing member is fitted into the at least one bush member. Preferably, the fixing member is configured to fix the battery module to an external base plate. Advantageously, the fixing member together with the bush member allows an easy assembly and fixation of the battery module.

The bush member is provided with a first hole extending along the length of the bush member through the bush member for receiving the fixing member. The configuration of the fixation element of the end plate, the bush member as a bush with a through hole allows simple fixation of the battery module.

Advantageously, the guide portion is configured to guide the bush member to its desired location at the end plate.

The battery module in one embodiment further comprises an end block provided between an outermost battery cell of the stacked battery cells and the respective end plate. Advantageously, the end block fills a space between the outermost battery cell and the end plate.

The end block provides a form fit with the respective end plate. Additionally or alternatively, the end block is formed of a material being lighter than the material of the respective end plate. Accordingly, the end block does not significantly increase the weight of the battery module. The end block may comprise a mounting region adapted to accommodate the bush member therein. The end block may further comprise a second base portion configured to closely contact the first base portion of the respective end plate. In this way, pressure can be applied to the outermost battery cell avoiding expansion of the battery cells.

An end plate may comprise at least one protruding portion protruding into the direction of a respective end block and the end block may comprise at least one mating or corresponding receiving region for engaging with the protruding portion.

A side plate may be provided on side surfaces of the stacked battery cells, the side plate includes a first fixing hole portion with a second hole provided to receive the fixing member extending through the bush member and provided to couple the side plate to the respective end plate.

A covering plate is provided covering a first side of the stacked battery cells where terminal portions of the battery cells are located or at the opposite side of where terminal portions are located, and having a second fixing hole portion with a third hole provided at the location of the bush member to receive the fixing member and couple the top plate to the respective end plate. This allows a tight coupling of the end plate to the end block and hardness is consequently increased against bending of the end plate.

Further provided is a system, preferably an electrical appliance system, which comprises a battery module according to the invention and an apparatus comprising a base portion for mounting the battery module to the apparatus, wherein the fixing member is fitted into the bush member of the battery module to couple the battery module to the base portion of the apparatus. In one embodiment, the apparatus may by an electrical apparatus using the energy provided by the inventive battery module. Advantageously, the fixing member together with the bush member allows simple and strong fixation of the battery module to the base plate.

The fixing member in one embodiment is provided with a screw line and the base portion comprises a threaded hole for engaging with the screw line of the fixing member.

The fixing member may be a long bolt.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view illustrating a battery module according to an embodiment.
FIG. 2 is an exploded perspective view illustrating the battery module shown in FIG. 1.
FIG. 3 is a diagram illustrating a coupling relationship between an end plate, a bush member and a fixing member according to an embodiment.
FIG. 4 is a perspective view illustrating an end plate and a bush member according to an embodiment.
FIG. 5 is a perspective view illustrating an end plate and a bush member according to an embodiment.
FIG. 6 is a perspective view illustrating a battery module according to an embodiment.
FIG. 7 is a perspective view illustrating the end block, end plate and bush member in FIG. 6.
FIG. 8 is a perspective view illustrating the end block, end plate and bush member according to an embodiment.
FIG. 9 is a perspective view illustrating an end block and an end plate according to an embodiment.
FIG. 10 is a perspective view illustrating an end block and an end plate according to an embodiment.
FIG. 11 is a perspective view illustrating a battery module according to an embodiment.
FIG. 12 is an exploded perspective view illustrating the battery module in FIG. 11.

### DETAILED DESCRIPTION

In the following detailed description, only certain exemplary embodiments of the present invention have been shown and described, simply by way of illustration. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

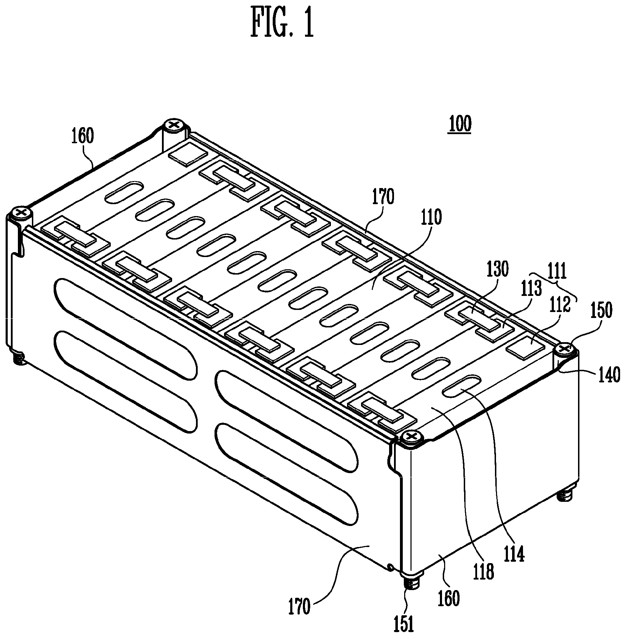

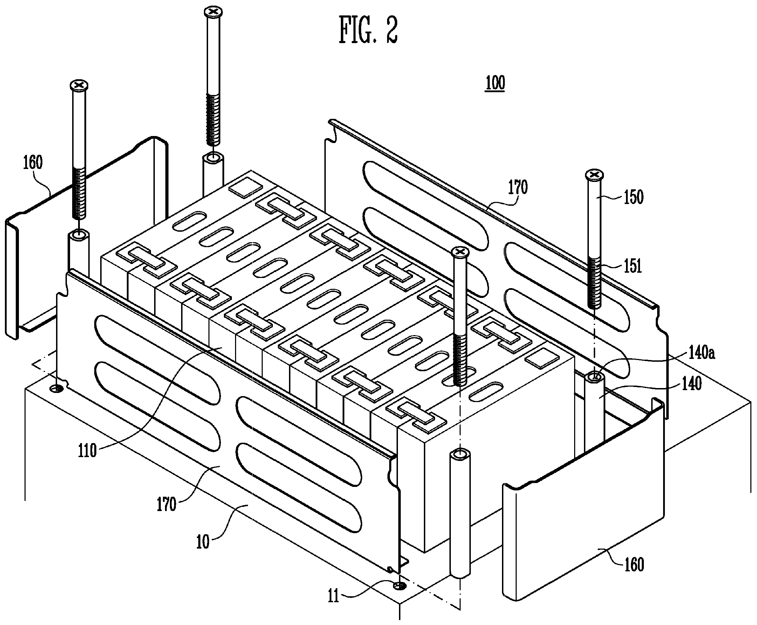

FIG. 1 is a perspective view illustrating a battery module according to an embodiment. FIG. 2 is an exploded perspective view illustrating the battery module shown in FIG. 1.

In an embodiment, the battery module 100 includes a plurality of battery cells 110 arranged in one direction, in the embodiment shown in Fig. 1 in the x-direction. The battery cells 110 may be arranged such that wide surfaces of adjacent battery cells 110 face each other, i.e. the wide surfaces extend in a yz-plane.

The battery cell 110 constituting the battery module 100 may include a battery case where one side is open and an electrode assembly and an electrolyte stored in the battery case. The electrode assembly and the electrolyte may generate energy in an electrochemical response. The battery case may be sealed by a first surface 118. The first surface 118 of the battery cell 110 may include a cap assembly and extends in a xy-plane. The first surface 118 may include a positive electrode terminal 112 and a negative electrode terminal 113, the positive and negative electrode terminals having different polarities, and a vent 114. The vent 114 serves as a passage through which gas generated inside the battery cell 110 is discharged to the outside as a safety tool of the battery cell 110.

In this embodiment, a case where the battery cell 110 is a prismatic lithium ion secondary battery will be described as an example. However, the present invention is not limited thereto and may be applied to various types of batteries including a lithium polymer battery.

A pair of end plates 160 may be provided adjacent to the outermost battery cells 110. A pair of side plates 170 coupling the pair of end plates 160 may be provided on sides of the battery cells 110. The end plate 160 and the side plate 170 may be coupled to each other by means of the laser welding or ultrasonic wave welding. The plurality of battery cells 110 may be arranged in one direction in space sectioned by the pair of end plates 160 and the pair of side plates 170.

The plurality of battery cells 110 may be arranged side by side such that the wide surfaces face each other and extend in a plane perpendicular to the stacking direction x. The positive electrode terminal 112 and the negative electrode terminal 113 of two adjacent battery cells 110 may be electrically connected to each other through a bus-bar 130. The bus-bar 130 may be formed of electro conductive metal such as gold, silver, copper, nickel, aluminum, copper alloy, aluminum alloy, etc. to electrically connect between the terminal portions 111. Furthermore, the bus-bar 130 may be coupled to the terminal portions 111 by means of welding. The welding may be the laser welding or the ultrasonic wave welding. The bus-bar 130 may take various forms based on a shape of the terminal portions 111.

A bush member 140 is coupled to the end plate 160. The bush member 140 may have a first hole 140a inside the bush member 140. The battery module 100 may be fastened to a base portion 10 of an apparatus where the battery module 100 is mounted by a fixing member 150 inserted into the bush member 140.

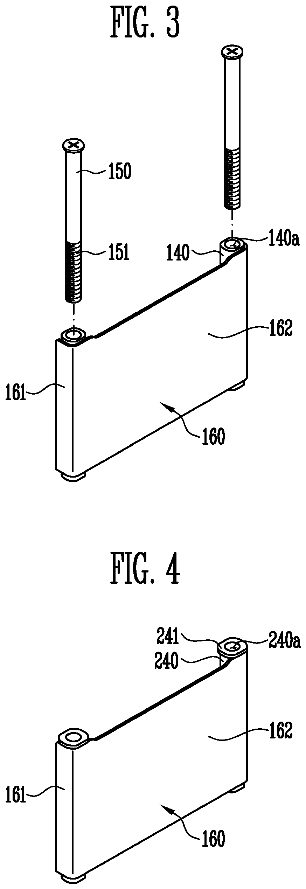

FIG. 3 is a diagram illustrating a coupling relationship between an end plate, a bush member and a fixing member according to an embodiment.

Referring to FIG. 3, the end plate 160 includes extending portions 161 that are bent and extended at both ends from the first main portion 162 of the end plate 160 in a direction of the battery cell 110, i.e. in x-direction. The first main portion 162 in Fig. 3 has a plate like shape and extends in a plane perpendicular to the stacking direction x, i.e. in a yz plane. The bush member 140 may be coupled to the extending portion 161.

The end plate 160 and the bush member 140 may be formed of metal like a material such as steel. The bush member 140 may be robustly coupled to the extending portion 161 by means of the laser welding or the ultrasonic wave welding.

At the bush member 140, the first hole 140a that passes through along a direction of a length of the bush member 140 may be formed. The fixing member 150 may be inserted through the first hole 140a. The bush member 140 in the present invention has the shape of a bush, i.e. a tubular shape with a first hole 140a formed as a through hole in the middle of the bush member 140.

The fixing member 150 may be a long bolt. The battery module 100 may be fixed to the base portion 10 by having a screw line 151 formed in a lower part of the fixing member 150 be fastened to a hole 11 formed at the base portion 10 of the apparatus.

In an embodiment, the battery module 100 is not fixed to the base portion 10 using a hole 11 passing through the base portion 10 and bolting the battery module 100 to the base portion 10 through the hole 11 by expanding the end plate; rather, the battery module 100 may be robustly fastened to the base portion 10 using a separate member such as the bush member 140.

FIG. 4 is a perspective view illustrating an end plate and a bush member according to the invention.

Referring to FIG. 4, on a top of the bush member 240, there is formed a guide portion 241 configured to guide a location of the bush member 240 at the extending portion 161 of the end plate 160. The bush member 240 may be guided such that the bush member 240 is positioned by the guide portion 241 to be where the bush member 240 is desired to be as the bush member 240 is hooked at a top of the end plate 160. The guide portion 241 is formed at the top of the bush member 240. After fixation of the bush member 240, the guide portion 241 rests on the corner parts of the corner between the extending portion 161 and the first main portion 162. Thus, the guide portion 241 matches the configuration of the corner between the extending portion 161 and the first main portion 162 and thus the bush member 240 is guided into the corner portion by the matching shape of the guide portion 241 such that the bush member 240 is guided to its desired position at the end plate 160. The height of the bush member 240 including the guide portion 161 is preferably larger than the height of the end plate 160. Accordingly, the bush member 240 may be easily welded to the end plate 160.

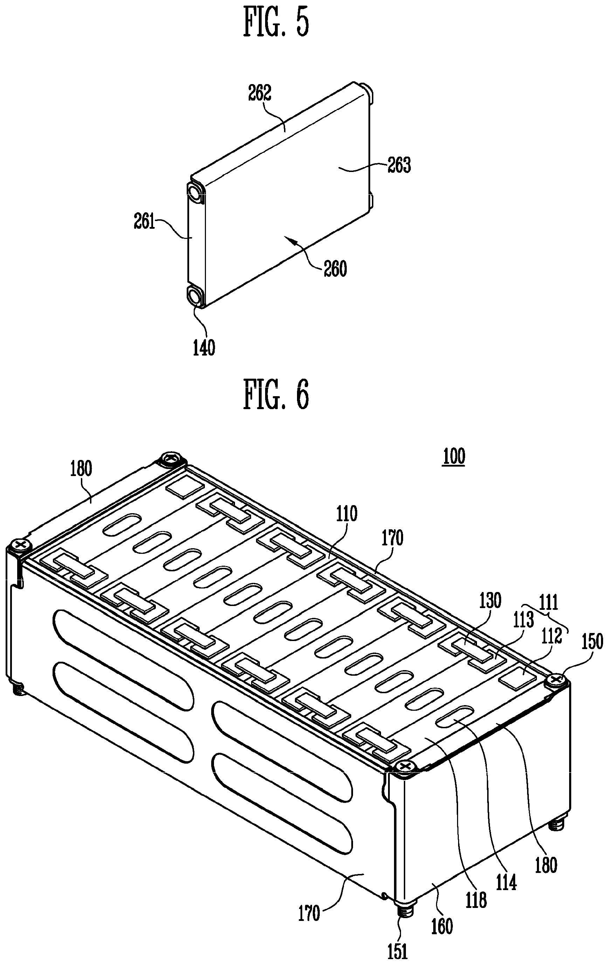

FIG. 5 is a perspective view illustrating an end plate and a bush member according to an embodiment.

Referring to FIG. 5, the end plate 260 may include first extending portions 261 that are bent and extended at both side ends of the end plate 260 in a direction of the battery cell 110, i.e. in the x-direction, and second extending portions 262 that are bent and extended at upper and lower ends of the first main portion 263 of the end plate 260 in a direction of the battery cell 110. The bush member 140 may be coupled to the second extending portion 262.

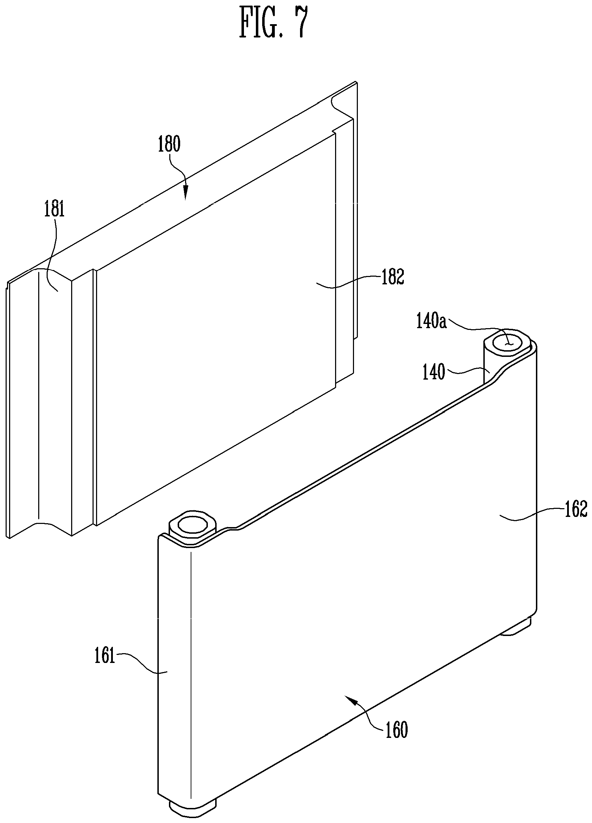

FIG. 6 is a perspective view illustrating a battery module according to an embodiment. FIG. 7 is a perspective view illustrating the end block, end plate and bush member in FIG. 6. In this embodiment, referring to FIGS. 6 and 7, the end block, end plate and bush member will be described. Like reference numerals refer to like elements throughout, and repetitive description will be omitted.

Referring to FIGS. 6 and 7, the end block 180 may be provided between the outermost battery cell 110 and the end plate 160. The end block 180 may fill space, made by the bush member 140, between the end plate 160 and the battery cell 110. Mounting regions 181 where the bush members 140 are mounted may be provided at both ends of the end block 180. The mounting region 181 may correspond to the bush member 140 in shape. The mounting region 181 is mating the shape of the bush member 140. The mounting region 181 extends from the second main portion 182 of the end block 180.

The end block 180 may be arranged to come in contact with the outermost battery cell 110 on the surface. The end block 180 may apply pressure to the plurality of battery cells 110 towards inside, which prevents a swelling phenomenon from occurring at the battery cells 110. In a case of a conventional battery module 110, pressure was applied to the battery cells 110 using only the end plates 160. In this case, since the end plates 160 were thin, and therefore, there was a limit to how strong of pressure may be applied to the battery cells 110. However, in an embodiment, the end block 180 is further included, which increases thickness of a portion applying pressure to the battery cells 110. Therefore, pressure may be more strongly applied to the battery cell 110.

The end block 180 may be formed of a lighter material such as a plastic material, unlike the end plate 160 which is formed of a metal material. Accordingly, the end block 180 may not significantly increase the weight of the battery module 100.

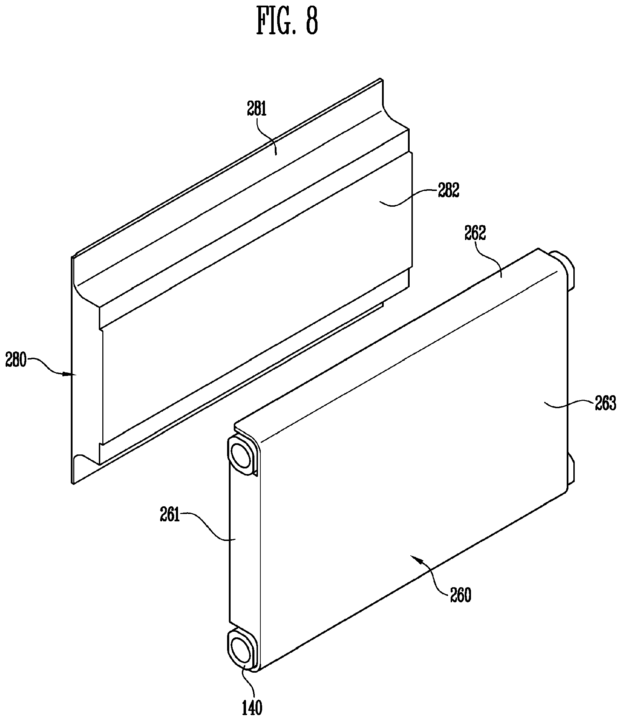

FIG. 8 is a perspective view illustrating the end block, end plate and bush member according to an embodiment. In this embodiment, referring to FIG. 8, the end block, end plate and bush member will be described. Like reference numerals refer to like elements throughout, and repetitive description will be omitted.

Referring to FIG. 8, mounting regions 281 where the bush members 140 are mounted may be provided at upper and lower ends of the end block 280, respectively at the base portions 282 of the end block 280. The mounting region 281 may correspond to the bush member 140 in shape.

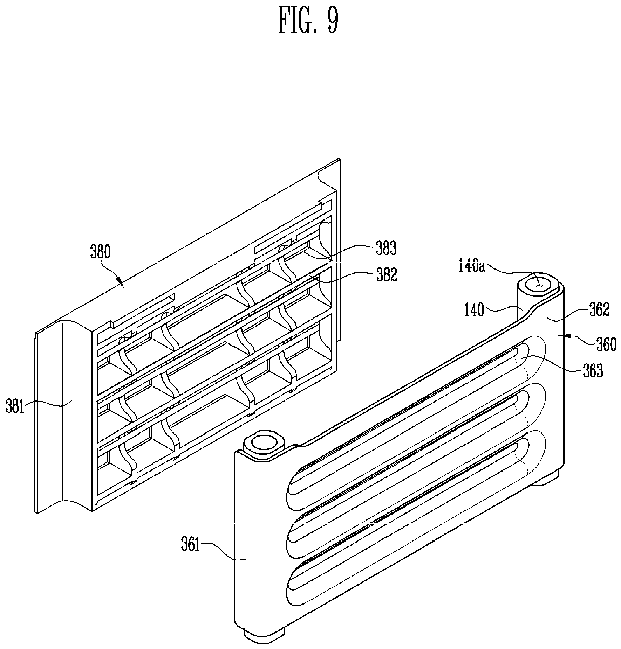

FIG. 9 is a perspective view illustrating an end block 380 and an end plate 360 according to an embodiment. In this embodiment, referring to FIG. 9, the end block and the end plate will be described. Like reference numerals refer to like elements throughout, and repetitive description will be omitted.

Referring to FIG. 9, on a side of the end plate 360, at the main portion 362 of the end plate 360, there may be formed at least a protruding region 363. The protruding region 363 may protrude in a direction of the end block 380. On a side of the end block 380, the main portion 382 of the end block 380, there may be formed at least a receiving region 383. The receiving region 383 may receive the protruding region 363. As the protruding region 363 is received by the receiving region 383, the end block 380 and the end plate 360 may be tightly coupled together, and hardness may be increased against bending of the end plate 360.

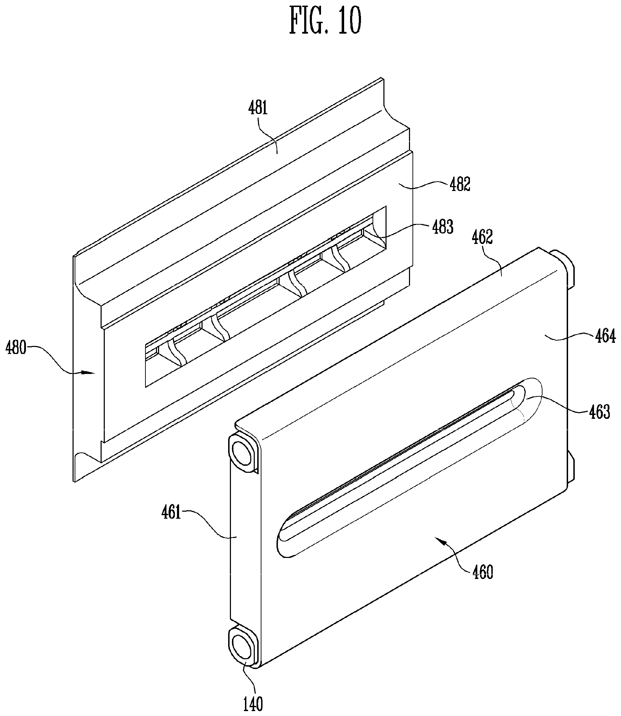

FIG. 10 is a perspective view illustrating an end block and an end plate according to an embodiment. In this embodiment, referring to FIG. 10, the end block and the end plate will be described. Like reference numerals refer to like elements throughout, and repetitive description will be omitted.

Referring to FIG. 10, on a side of the end plate 460, the main portion 464 of the end plate 460, there may be formed at least a protruding region 463. The protruding region 463 may protrude in a direction of the end block 480. On a side of the end block 480, the main portion 482 of the end block 480, there may be formed at least a receiving region 483. The receiving region 483 may receive the protruding region 463. As the protruding region 463 is received by the receiving region 483, the end block 480 and the end plate 460 may be tightly coupled together, and hardness may be increased against bending of the end plate 460.

The end plate 460 may include first extending portions 461 that are bent and extended at both side ends of the end plate 460 from the first main portion 464 in a direction of the battery cell 110, i.e. the x-direction, and second extending portions 462 that are bent and extended at upper and lower ends of the end plate 460 from the first main portion 464 in a direction of the battery cell 110. The bush member 140 may be coupled to the second extending portion 462.

Mounting regions 481 where the bush members 140 are mounted may be provided at upper and lower ends of the end block 480. The mounting region 481 may correspond to the bush member 140 in shape.

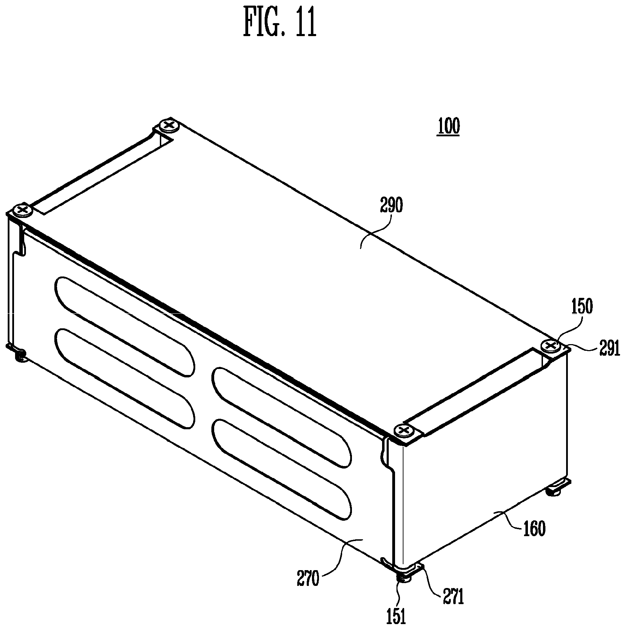

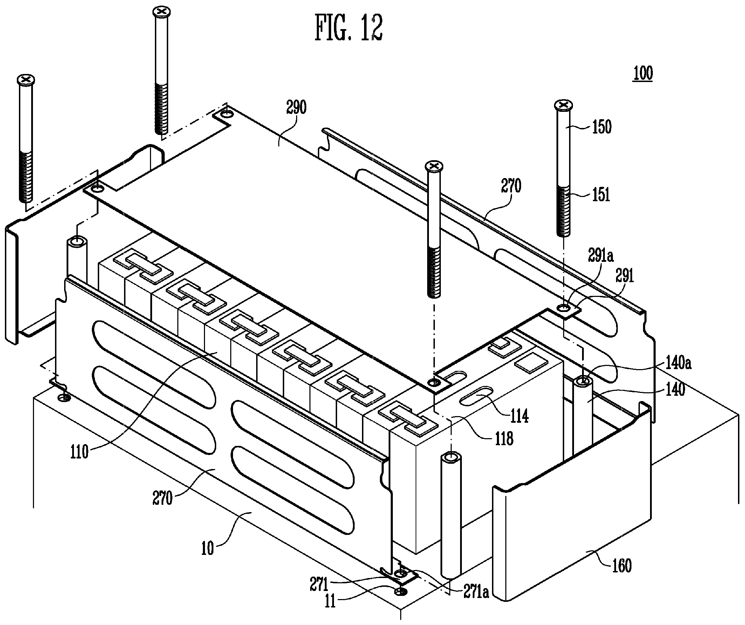

FIG. 11 is a perspective view illustrating a battery module according to an embodiment. FIG. 12 is an exploded perspective view illustrating the battery module in FIG. 11. In this embodiment, referring to FIGS. 11 and 12, the end block and the end plate will be described. Like reference numerals refer to like elements throughout, and repetitive description will be omitted.

Referring to FIGS. 11 and 12, a side plate 270 may be arranged on a side of the battery cell 110. The side plate 270 may extend to a bottom of the bush member 140. The side plate 270 may include a first fixing hole portion 271 having a second hole 271a inside. The fixing member 150 may be inserted into the first and second holes 140a and 271a at the bush member 140, fastening the side plate 270 and the bush member 140 together. Therefore, the side plate 270 and the end plate 160 may be more robustly coupled.

The battery module 100 may include a top plate 290 covering a top of the battery cell 110. The top plate 290 may cover a first side 118 of the battery cell 110. The first side 118 may be a side of the battery cell 110 where the terminal portions 222 are pulled out. As the top plate 290 covers the first surface 118, short circuiting of the terminal portions 111 or the bus-bar 130 along with an outside conductive body may be prevented. The top plate 290 may be coupled to the side plate 270 by means of the ultrasonic wave welding or the laser welding.

At the top plate 290, a second fixing hole portion 291 having a third hole 291a inside may be provided. The second fixing hole portion 291 may extend to the top of the bush member 140. The fixing member 150 may be inserted into the first and third holes 140a and 291a at the bush member 140, fastening the top plate 290 and the bush member 140 together. Therefore, the top plate 290 and the end plate 160 may be more robustly coupled.

By way of summation and review, the battery module 100 may separately include the bush member 140 in order to fix the battery module 100 to the base portion 10. Thus, the battery module 100 may be stably fixed. Also, since the bush members 140 are coupled to both ends or upper and lower ends of each of the pair of end plates, an impact coming from the outside that is applied to all across the battery module 100 may be uniformly distributed to the end plates, which prevents the impact from being applied to certain portions only.

## Claims

1. A battery module (100) comprising:
a plurality of battery cells (110) stacked along a first direction;
a pair of end plates (160) arranged spaced apart from each other in the first direction at respective end faces of the stacked battery cells (110); and
at least one bush member (240) is provided coupled to each end plate (160) extending in a second direction perpendicular to the first direction, the second direction being the top-bottom direction, **characterized in that**
each end plate (160) comprises a first main portion (162) and extending portions (161) extending from the first main portion (162) toward the battery cells (110),
wherein the bush member (240):
extends in the second direction along the direction along which the intersection between the first main portion (162) and the extending portion (161) extends,
is coupled to the extending portions (161), and
further comprises a guide portion (241) which is formed at the top of the bush member (240) and is provided on top of the end plate (160) at a corner formed by the extending portion (161) and the first main portion (162) for positioning the bush member (240) at the end plates.

2. The battery module (100) of claim 1, further comprising a fixing member (150), wherein the fixing member (150) is fitted into the at least one bush member (140).

3. The battery module (100) of claim 2, wherein the bush member (140) is provided with a first hole (140a) extending along the length of the bush member (140) through the bush member (140) for receiving the fixing member (150).

4. The battery module (100) of one of the previous claims, wherein each end plate (160) extends in a plane perpendicular to the first direction.

5. The battery module (100) of one of the previous claims, further comprising an end block (180) provided between an outermost battery cell (110) of the stacked battery cells (110) and the respective end plate (160).

6. The battery module (100) of claim 5, wherein the end block (180):
provides a form fit with the respective end plate (160), and/or
is formed of a material being lighter than the material of the respective end plate (160).

7. The battery module (100) of claim 5 or 6, wherein the end block (180) comprises a mounting region (181) adapted to accommodate the bush member (140) therein.

8. The battery module (100) of claim 7, wherein the end block (180) further comprises a second main portion (182) configured to closely contact the first main portion (162) of the respective end plate (160).

9. The battery module (100) of one of the previous claims 5 to 8, wherein an end plate (360) comprises at least one protruding portion (363) protruding into the direction of a respective end block (380) and the end block (380) comprises at least one mating receiving region (383) for engaging with the protruding portion (363).

10. The battery module (100) of one of the previous claims 2 to 9, wherein a side plate (270) is provided on side surfaces of the stacked battery cells (110), the side plate (270) includes a first fixing hole portion (271) with a second hole (271a) provided to receive the fixing member (150) extending through the bush member (140) and provided to couple the side plate (270) to the respective end plate (140).

11. The battery module (100) of one of the previous claims 2 to 10, wherein a top plate (290) is provided covering a first side (118) of the stacked battery cells (110) where terminal portions (112) of the battery cells (110) are located or at the opposite side of where terminal portions (112) are located, and having a second fixing hole portion (291) with a third hole (291a) provided at the location of the bush member (140) to receive the fixing member (150) and couple the top plate (290) to the respective end plate (140).

12. A system comprising:
a battery module (100) according to one of the previous claims 2 to 11, and
an apparatus comprising a base portion (10) for mounting the battery module (100) to the apparatus,
wherein the fixing member (150) fitted into the bush member (140) of the battery module (100) is coupled to the base portion (10).

13. The system of claim 12, wherein the fixing member (150) is provided with a screw line (151) and the base portion (10) comprises a threaded hole (11) for engaging with the screw line of the fixing member (150).

## Patentansprüche

1. Batteriemodul (100), umfassend:
mehrere Batteriezellen (110), die entlang einer ersten Richtung gestapelt sind;
ein Paar von Endplatten (160), das in der ersten Richtung an jeweiligen Stirnseiten der gestapelten Batteriezellen (110) zueinander beabstandet angeordnet ist; und
mindestens ein Buchsenelement (240) mit jeder Endplatte (160) verbunden bereitgestellt ist, wobei es sich in eine zweite Richtung erstreckt, die senkrecht zur ersten Richtung verläuft, wobei die zweite Richtung die Oben-Unten-Richtung ist,
**dadurch gekennzeichnet, dass**
jede Endplatte (160) einen ersten Hauptabschnitt (162) und sich erstreckende Abschnitte (161), die sich vom ersten Hauptabschnitt (162) zu den Batteriezellen (110) erstrecken, umfasst,
wobei das Buchsenelement (240):
sich in die zweite Richtung entlang der Richtung erstreckt, entlang welcher sich die Schnittstelle zwischen dem ersten Hauptabschnitt (162) und dem sich erstreckenden Abschnitt (161) erstreckt,
mit den sich erstreckenden Abschnitten (161) verbunden ist, und
ferner einen Führungsabschnitt (241) umfasst, welcher auf der Oberseite des Buchsenelements (240) ausgebildet ist und auf der Oberseite der Endplatte (160) an einer Ecke bereitgestellt ist, die durch den sich erstreckenden Abschnitt (161) und den ersten Hauptabschnitt (162) ausgebildet ist, um das Buchsenelement (240) an den Endplatten anzuordnen.

2. Batteriemodul (100) nach Anspruch 1, das ferner ein Befestigungselement (150) umfasst,
wobei das Befestigungselement (150) in das mindestens eine Buchsenelement (140) eingepasst ist.

3. Batteriemodul (100) nach Anspruch 2, wobei das Buchsenelement (140) mit einem ersten Loch (140a) versehen ist, das sich entlang der Länge des Buchsenelements (140) durch das Buchsenelement (140) erstreckt, um das Befestigungselement (150) aufzunehmen.

4. Batteriemodul (100) nach einem der vorhergehenden Ansprüche, wobei sich jede Endplatte (160) in einer Ebene senkrecht zur ersten Richtung erstreckt.

5. Batteriemodul (100) nach einem der vorhergehenden Ansprüche, das ferner einen Endblock (180) umfasst, der zwischen einer äußersten Batteriezelle (110) der gestapelten Batteriezellen (110) und der jeweiligen Endplatte (160) bereitgestellt ist.

6. Batteriemodul (100) nach Anspruch 5, wobei der Endblock (180):
einen Formschluss mit der entsprechenden Endplatte (160) bereitstellt, und/oder
aus einem Material gebildet ist, das leichter als das Material der jeweiligen Endplatte (160) ist.

7. Batteriemodul (100) nach Anspruch 5 oder 6, wobei der Endblock (180) einen Befestigungsbereich (181) umfasst, der dazu ausgelegt ist, das Buchsenelement (140) darin aufzunehmen.

8. Batteriemodul (100) nach Anspruch 7, wobei der Endblock (180) ferner einen zweiten Hauptabschnitt (182) umfasst, der konfiguriert ist, in engem Kontakt mit dem ersten Hauptabschnitt (162) der jeweiligen Endplatte (160) zu stehen.

9. Batteriemodul (100) nach einem der vorhergehenden Ansprüche 5 bis 8, wobei eine Endplatte (360) mindestens einen vorstehenden Abschnitt (363) umfasst, der in die Richtung eines jeweiligen Endblocks (380) hervorsteht und der Endblock (380) mindestens einen passenden Empfangsbereich (383) zum Eingreifen mit dem vorstehenden Abschnitt (363) umfasst.

10. Batteriemodul (100) nach einem der vorhergehenden Ansprüche 2 bis 9, wobei eine Seitenplatte (270) an Seitenflächen der gestapelten Batteriezellen (110) bereitgestellt ist, wobei die Seitenplatte (270) einen ersten Befestigungslochabschnitt (271) mit einem zweiten Loch (271a) umfasst, das bereitgestellt ist, um das Befestigungselement (150) aufzunehmen, das sich durch das Buchsenelement (140) erstreckt, und bereitgestellt ist, um die Seitenplatte (270) mit der jeweiligen Endplatte (140) zu verbinden.

11. Batteriemodul (100) nach einem der vorhergehenden Ansprüche 2 bis 10, wobei eine Deckplatte (290) bereitgestellt ist, die eine erste Seite (118) der gestapelten Batteriezellen (110) dort bedeckt, wo Anschlussabschnitte (112) der Batteriezellen (110) angeordnet sind, oder an der gegenüberliegenden Seite der Position, an der Anschlussabschnitte (112) angeordnet sind, und einen zweiten Befestigungslochabschnitt (291) mit einem dritten Loch (291a), das an der Position des Buchsenelements (140) bereitgestellt ist, aufweist, um das Befestigungselement (150) aufzunehmen und die Deckplatte (290) mit der jeweiligen Endplatte (140) zu verbinden.

12. System, umfassend:
ein Batteriemodul (100) nach einem der vorhergehenden Ansprüche 2 bis 11, und
eine Vorrichtung, die einen Basisabschnitt (10) zum Befestigen des Batteriemoduls (100) an der Vorrichtung umfasst,
wobei das Befestigungselement (150), das in das Buchsenelement (140) des Batteriemoduls (100) eingepasst ist, mit dem Basisabschnitt (10) verbunden ist.

13. System nach Anspruch 12, wobei das Befestigungselement (150) mit einer Schraubenlinie (151) bereitgestellt ist und der Basisabschnitt (10) eine Gewindebohrung (11) zum Eingreifen mit der Schraubenlinie des Befestigungselements (150) umfasst.

## Revendications

1. Module de batterie (100), comprenant :
une pluralité de cellules de batterie (110) empilées suivant une première direction ;
une paire de plaques d'extrémité (160) agencées de manière espacée l'une de l'autre suivant la première direction à des faces d'extrémité respectives des cellules de batterie empilées (110) ; et
au moins un élément de bague (240) est fourni couplé à chaque plaque d'extrémité (160) s'étendant suivant une seconde direction perpendiculaire à la première direction, la seconde direction étant la direction haut-bas,
**caractérisé en ce que** chaque plaque d'extrémité (160) comprend une première partie principale (162) et des parties d'extension (161) s'étendant à partir de la première partie principale (162) jusqu'aux cellules de batterie (110),
dans lequel l'élément de bague (240) :
s'étend suivant la seconde direction le long de la direction le long de laquelle s'étend l'intersection entre la première partie principale (162) et la partie d'extension (161),
est couplée aux parties d'extension (161), et
comprend en outre une partie de guide (241) qui est formée à la partie supérieure de l'élément de bague (240) et est fournie au-dessus de la plaque d'extrémité (160) à un coin formé par la partie d'extension (161) et la première partie principale (162) pour positionner l'élément de bague (240) aux plaques d'extrémité.

2. Module de batterie (100) selon la revendication 1, comprenant en outre un élément de fixation (150), dans lequel l'élément de fixation (150) est ajusté à l'intérieur du au moins un élément de bague (140).

3. Module de batterie (100) selon la revendication 2, dans lequel l'élément de bague (140) est équipé d'un premier trou (140a) s'étendant le long de la longueur de l'élément de bague (140) à travers l'élément de bague (140) pour recevoir l'élément de fixation (150).

4. Module de batterie (100) selon l'une quelconque des revendications précédentes, dans lequel chaque plaque d'extrémité (160) s'étend dans un plan perpendiculaire à la première direction.

5. Module de batterie (100) selon l'une quelconque des revendications précédentes, comprenant en outre un bloc d'extrémité (180) fourni entre une cellule de batterie la plus à l'extérieur (110) des cellules de batterie empilées (110) et la plaque d'extrémité respective (160).

6. Module de batterie (100) selon la revendication 5, dans lequel le bloc d'extrémité (180) :
fournit une forme correspondant à la plaque d'extrémité respective (160) et/ou
est formé à partir d'un matériau plus léger que le matériau de la plaque d'extrémité respective (160).

7. Module de batterie (100) selon la revendication 5 ou 6, dans lequel le bloc d'extrémité (180) comprend en outre une région de montage (181) adaptée pour recevoir l'élément de bague (140) à l'intérieur de celle-ci.

8. Module de batterie (100) selon la revendication 7, dans lequel le bloc d'extrémité (180) comprend en outre une seconde partie principale (182) configurée pour entrer étroitement en contact avec la première partie principale (162) de la plaque d'extrémité respective (160).

9. Module de batterie (100) selon l'une quelconque des revendications précédentes 5 à 8, dans lequel une plaque d'extrémité (360) comprend en outre au moins une partie faisant saillie (363) faisant saillie suivant la direction d'un bloc d'extrémité respectif (380) et le bloc d'extrémité (380) comprend au moins une région de réception en correspondance (383) pour entrer en prise avec la partie faisant saillie (363).

10. Module de batterie (100) selon l'une quelconque des revendications 2 à 9, dans lequel une plaque latérale (270) est fournie sur des surfaces latérales des cellules de batterie empilées (110), la plaque latérale (270) comprend une première partie de trou de fixation (271) avec un deuxième trou (271a) fourni pour recevoir l'élément de fixation (150) s'étendant à travers l'élément de bague (140) et fourni pour coupler la plaque latérale (270) à la plaque d'extrémité respective (140).

11. Module de batterie (100) selon l'une quelconque des revendications 2 à 10, dans lequel une plaque supérieure (290) est fournie couvrant un premier côté (118) des cellules de batterie empilées (110) où des parties de borne (112) des cellules de batterie (110) sont situées au côté opposé où des parties de borne (112) sont situées, et ayant un seconde partie de trou de fixation (291) avec un troisième trou (291a) fourni à l'emplacement de l'élément de bague (140) pour recevoir l'élément de fixation (150) et coupler la plaque supérieure (290) à la plaque d'extrémité respective (140).

12. Système comprenant :
un module de batterie (100) selon l'une quelconque des revendications 2 à 11, et
un dispositif comprenant une partie de base (10) pour monter le module de batterie (100) au dispositif,
dans lequel l'élément de fixation (150) ajusté à l'intérieur de l'élément de bague (140) du module de batterie (100) est couplé à la partie de base (10).

13. Système selon la revendication 12, dans lequel l'élément de fixation (150) est équipé d'une ligne de vis (151) et la partie de base (10) comprend un trou fileté (11) pour entrer en prise avec la ligne de vis de l'élément de fixation (150).
